(19) Europäisches Patentamt

European Patent Office

Office européen des brevets

(11) Publication number: **0 449 421 A1**

## (12) EUROPEAN PATENT APPLICATION

(21) Application number: **91301486.6**

(22) Date of filing: **25.02.91**

(51) Int. Cl.⁵: **A01G 13/10**

(30) Priority: **29.03.90 AU 9376/90**

(43) Date of publication of application:
**02.10.91 Bulletin 91/40**

(84) Designated Contracting States:
**AT BE CH DE DK ES FR GB GR IT LI LU NL SE**

(71) Applicant: **Lyons, Beaumont Gregory**
**Majors Creek Road, Woodstock**
**Townsville, Queensland 4816(AU)**

(72) Inventor: **Lyons, Beaumont Gregory**
**Majors Creek Road, Woodstock**
**Townsville, Queensland 4816(AU)**

(74) Representative: **Long, Edward Anthony et al**
**Hulse & Co. Cavendish Buildings West**
**Street**
**Sheffield S1 1ZZ(GB)**

(54) **Anti-bird netting.**

(57) Netting for protecting crops from birds which comprises a sheet of thin plastics material such as polythene which has a pattern of slits (33) formed therein to enable the sheet to be expanded in a transverse direction to the slits to produce an array of open polygonal shapes. The slits are arranged in groups extending in parallel alignment with respect to the edge of the sheet, with the slits of one group extending a short distance between the slits of an adjacent group. The netting is manufactured by passing the sheet over a plurality of rotatable blades (23) arranged in a spaced off-set configuration with respect to one another.

Fig.2.

EP 0 449 421 A1

THIS INVENTION relates to netting and is particularly concerned with pest deterrent netting for use in connection with horticultural crops, agriculture projects and the like, to deter birds, insects and other predators therefrom. Although the netting has many other sorts of uses, for instance in the erection of warning barricades around construction sites and the erection of shade areas, it will be described primarily in relation to anti-bird netting as the problem of providing a suitable environmentally compatible product for protecting crops from birds was the initial reason for development of the netting.

The invention is also concerned with a process and apparatus for manufacturing such netting.

Bird damage to horticultural crops is a serious problem throughout the world. The general approach has been to employ deterrent devices such as scarecrows or flashing mirrors, or to make intermittent loud noises. As a final remedy, shooting at the birds has been resorted to. Each of these methods, however, is only partially effective as the birds often become used to them and rarely do they work for long, especially when the birds requirements for food is intense.

The problem may, nevertheless, be overcome by netting the crop. Two types of netting are principally employed, viz "overhead permanent netting" and "drape netting". Overhead permanent netting works very well, but because of its very high expense, and the labour involved in erecting it, it is usually only used on small crop areas which have high returns.

Drape netting comprises draping the netting over the crop trees, shrubs or vines usually just before the fruit starts to ripen. It is taken off either immediately before or after the fruit has been harvested. Various types of drape nets are used which may be generally categorised as heavy duty nets and light-weight nets. Heavy duty nets are effective in keeping the birds out but are difficult to remove as the branches and leaves grow through the net. This oftentimes results in the nets being severely damaged upon removal with the result that they cannot be effectively reused. This is therefore generally an uneconomic proposition since the costs of the nets are very high and they need to be re-used some twenty to thirty times to be viable.

Light-weight nets presently in use are generally made out of thin strong strands or fibres of plastics material. These tend to be invisible to birds and wildlife, especially when in close proximity, and birds and wildlife often become trapped in the mesh. The mesh also tends to cut into the trapped creatures with fatal consequences as the mesh has a relatively high strength breaking point and it cannot be easily severed. These nets are also relatively expensive if only used once, which is more often than not the case as they are difficult to remove from the crop, and become damaged upon removal.

It is therefore an object of the invention to provide a netting which obviates or at least minimises the aforementioned disadvantages of existing netting.

It is a further object of the present invention to provide a netting which is environmentally acceptable.

Still further objects of the invention are to provide a process for manufacturing such netting and apparatus for use in such a process.

According to one aspect of the present invention, there is provided a sheet of plastics material having a multiplicity of slits formed therein characterised in that the pattern of slits is such that the sheet is expandable in a direction which is transverse to the direction of at least some of said slits so as to produce a netting having an array of open polygonal shapes.

The plastics material is preferably one which is of high density, or at least incorporates a significant proportion of high density (as against low density) component since it has been found that this form is more suitable when producing the slits therein, as hereinafter described, as it is less prone to tear. A wide range of plastics material may be employed, among which are the thermoplastics polymers such as polyethylene ("polythene"), polyvinylchloride ("PVC"), polysulfone, polypropylene and polybutylene; the viscose polymers such as cellulose, polyvinylethylether, and so forth.

The plastics material is in the form of a sheet having a very small or film-like thickness. The actual thickness will be determined by the type of plastics polymer from which the sheet is manufactured and also the particular end use of the netting, but will generally be within the range of 20-60 microns. For polythene for use in draping crop trees, the preferred thickness is about 40 microns. Such film is a stock-standard product manufactured by several companies and sold in rolls typically 0.5 metre and 1 metre wide in which the film is doubled over giving an effective film width of 1 metre and 2 metres, respectively. These widths can be expanded out to 5 and 10 metres respectively when the slits have been formed therein.

In a further embodiment of the invention, it is possible to form a laminate structure comprising several sheets of the same or different sheet plastics material. It is also possible to laminate the sheet plastics material to a sheet of paper. The paper may be desirable in some instances where greater strength is required or where a carrier is required for an insecticide or other additive. Thus, for instance, in order to protect a crop from fruit fly, instead of spraying the crop, a fruit fly insecticide may be impregnated into the paper. A commonly used insecticide for this purpose also includes a bait which is a yeast extract which attracts the fruit fly.

The plastics material will generally be colourless but in certain applications it is desirable or even essential to incorporate a particular colour therein. Thus, for instance, it has recently been discovered that aphids will be repelled from crops draped in a white coloured netting.

The slits in the sheet of plastics material are all preferably aligned in substantially the same direction. Preferably, this direction is essentially parallel to the long edges of the sheet or roll from which the netting is produced. The lengths of the slits will be determined by the desired size of polygonal shapes to be produced therein. The preferred length of slits will generally be in the order of 3 to 10 centimetres in length, most preferably about 6 centimetres. The width of the slits is not readily ascertainable as the slits are formed by a cutting action which leaves no residue or cut-out portion. Typically, however, the slits will individually vary in width and this variation may be from almost zero to about 1 millimetre.

The arrangement of slits is so as to produce an open polygonal structure upon expansion or extension of the sheet in a transverse direction to the slits. To this end, the slits are suitably arranged in one or more groups extending in substantially parallel alignment from long one side of the sheet to the other long side. Adjacent groups of slits, that is groups either preceding or following any one primary group, are preferably arranged so that the individual slits of the group overlap, or extend between, the slits of the primary group. It is also preferred if the slits in any one group of slits do not extend in a straight alignment with one another but rather a sinuous pattern, for the purpose which will become apparent when the description of the apparatus is read.

The spacing between the slits of any one group will once again be determined by the nature of the polymer from which the sheet material is fabricated and the thickness of the sheet, as well as the actual length of the slits. For most applications, the spacing will be within the range of 2 mm to 20 mm. For polythene sheet, having a thickness of about 40 microns and slits of about 6 cm in length, a suitable spacing is about 8 mm.

The open polygonal shapes produced by the array of overlapping groups of slits described above, is substantially uniform hexagonal, but other shapes may be produced by other arrangements of slits as will be readily appreciated.

The nature of the netting is such that it allows the incorporation of bird and other creature repellents into it during manufacture. A particularly useful non-toxic and environmentally acceptable repellent is SAVANA which is manufactured by The Savana Company, California, U.S.A. This product has a smell and a taste which repels most creatures without adversely affecting them.

The netting thus described can readily be seen by birds and other creatures yet provides a camouflage effect for the fruit or other crop ripening under the netting. Birds are cautious about approaching the netted area, but on approach are confronted with a physical barrier and, optionally, the repugnant smell of a bird repellent. If they continue into the netting they run the risk of being caught, but because of the micron thickness of the netting and its concomitant low strength, the birds can readily escape after a bit of a struggle. Such birds are quite fraught with the experience and are unlikely to return. On the rare chance that a bird is caught up in the netting, it is generally unharmed and can be very easily released.

In view of the low cost of manufacture, the netting need only be used once. It is easy to install and can be easily removed by ripping it off. In the case of polythene, any pieces that are left will disintegrate after a few months in the sunlight, making it an environmentally acceptable product.

According to another aspect of the present invention, there is provided a process for manufacturing netting of the type described above, which process comprises passing a sheet of plastics material over a plurality of blades, said process being characterised in that the blades are arranged in a spaced off-set configuration with respect to one another, so as to produce the desired array of slits in the sheet.

Preferably, the sheet plastics material is slit as it is unrolled from a continuous roll and is then immediately wound onto a take-up spool. The take-up spool is preferably connected to a motor through a reduction gearbox, and provides the driving means for the sheet plastics material to be unwound and then re-wound again.

The blades may be arranged in any fashion to achieve the desired end result. They are preferably arranged to rotate into and out of the plastics sheet and are suitably located on a plurality of discs which rotate about a common shaft beneath the passing sheet of plastics material. The discs are preferably arranged to rotate faster than the speed of the plastics sheet material to ensure that effective slitting is achieved.

The apparatus used to effect such a process constitutes another aspect of the present invention.

According to this aspect there is provided an apparatus for carrying out the aforementioned process, said apparatus comprising a motorized feed arrangement for feeding sheet plastic from a roll over a plurality of blades supported for rotation about a common shaft.

The motorized feed arrangement may suitably comprise a drive roller rotated by a belt pulley connected to a reduction gear box and electric motor.

The blades, as previously stated, are preferably attached to the periphery of a plurality of discs. Most suitably there are two blades on each disc, which blades are separated from one another by 180°. The discs may vary in size from 20 to 200 mm in diameter depending upon the size of the slit it is desired to produce in the sheet plastics material. A most convenient size disc is about 100 mm in diameter. The blades may comprise trapezoidal shaped pieces of spring steel which are honed on one edge, and project outwardly from a disc in the same plane as the disc. The arrangement of the blades on each disc is such that upon rotation, the pointed apex of each blade is the first portion of the blade to come into contact with the sheet plastic. This enables the sheet plastic to be pierced immediately before it is slit and this greatly facilitates the cutting procedure.

The discs themselves may be made of plate or sheet metal. They may be spaced from one another by spacers which vary in thickness depending upon the web width required in the netting. Suitable spacers will generally be about 1 mm to 6 mm in thickness, most preferably about 3 mm.

Blades on adjacent discs may be offset from one another so that adjacent slits are not cut simultaneously in the sheet plastics material. The cutting edges of adjacent blades do, however, preferably overlap one another when viewed along the axial direction of the cutting roller and the main purpose of the blades being offset is so that there are not a multiplicity of punctures being made in the sheet plastics material at the same time. Such a situation could result in the sheet being twisted out of alignment with a resultant jumble of slits. Preferably, the blades are arranged so as to form a sinuous pattern from one end of the cutting roller to the other.

The apparatus also suitably includes a number of idler rollers about which the sheet plastics material travels. The main purpose of such idler rollers is to tension the sheet adequately as it is being cut.

It is also highly desirable to rotate the cutting roller in the same direction as the plastics sheet material travels, but at a faster speed than the speed of the plastics sheet material. This may be achieved by linking the cutting roller by a belt drive to a pulley wheel on one of the idler rollers which is larger than the pulley wheel on the cutter roller.

Preferably, there are two idler rollers acting in concert about which the sheet plastics material travels prior to passing over the cutting roller, and a single support roller over which the cut sheet material passes prior to being rolled up onto a take-up spool.

The entire apparatus may be supported on a framework structure with the rollers being arranged at bench height for optimum convenience.

A preferred embodiment of the invention will now be described with reference to the accompanying drawings, in which:-

Fig. 1 is a perspective view of apparatus for producing netting according to the present invention;

Fig. 2 is a close-up view of a portion of the expanded netting of the invention;

Fig. 3 is a plan view of a portion of the unexpanded netting of the invention;

Fig. 4 is a side-on view of a cutting disc with attached blade;

Fig. 5 is a partial plan view of cutting discs fitted to a shaft;

Fig. 6 is a perspective view of Fig. 5; and

Fig. 7 is a perspective view of the netting depicted in Fig. 1 in use.

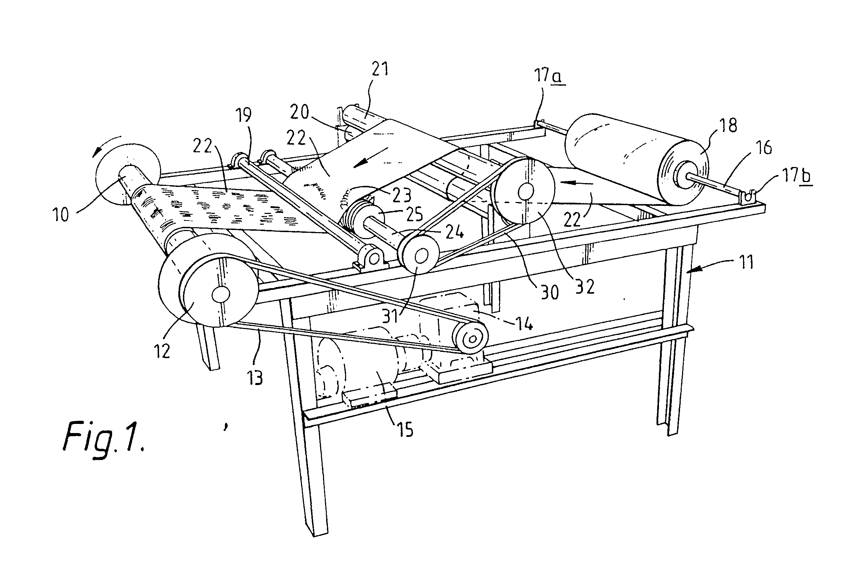

Referring firstly to the apparatus depicted in Figs. 1 and 4-6 of the drawings, in which like numbered parts indicate the same features, the apparatus comprises a drive roller 10 supported for rotation in a horizontal plane atop one end of a bench framework 11. The drive roller 10 is connected at one end through a pulley wheel 12 and belt drive 13 to a reduction gear box 14 which is driven by an electric motor 15 of 0.5 horsepower.

A wind-out roller 16 is supported for free rotation in U-shaped housings 17a, 17b at the opposite end of the framework. This roller is adapted to retain a roll 18 of sheet plastics material in a horizontal plane, and to permit it to be freely unwound when connected to the drive roller 10.

Intermediate between the wind-out roller 16 and the drive roller 10, are three idler rollers 19, 20, 21. The first idler roller 19 is adapted to tension the trailing end of the sheet plastics material 22 against the blades 23 of a cutting roller 24. The second and third idler rollers 20, 21, align the angle of approach of the sheet plastics material with the blades 23 on the cutting roller 24 and tension the leading section of the sheet prior to it being cut.

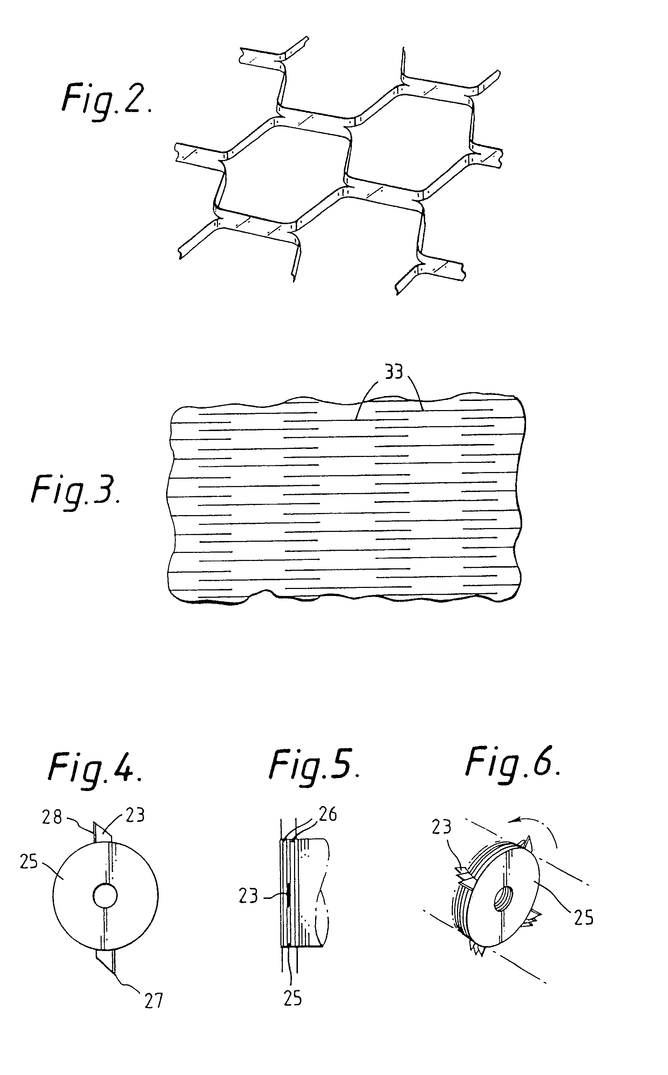

The cutting roller 24 has a multiplicity of discs 25 to which the cutting blades 23 are fixed. Each disc has two cutting blades located at 180° from one another. Adjacent discs are separated from each other by spacers 26 (see Fig. 5). The blades are trapezoidal in shape and have a pointed edge 27 which pierces the sheet plastics material prior to cutting the sheet plastics material along honed edge 28. The blades are arranged in a sinusoidal pattern about the cutting roller 24 as can be partially seen in Figs. 1 and 6.

A pulley belt 30 connects the cutting roller 24 to the second idler roller 21, by way of pulleys 31, 32. The diameter of the pulleys is chosen so that the cutting roller rotates faster than the speed of the sheet plastics material 22 through the apparatus.

In operation, a roll 18 of plastics material such as 20 micron polythene, having a roll width of 0.5 m and a sheet width of 1.0 m, is placed on the wind-out roller 16. The leading edge of the sheet plastics material is passed around the idler and cutting rollers in the pattern illustrated and is connected to the drive roller 10. The drive roller is set in motion by the electric motor 15 and it rotates in the direction indicated by the circular arrow. The sheet plastics material is thereby wound onto the drive roller from the roll 18. During its passage from the roll 18 to the drive roller 10, the sheet plastics material frictionally rotates the second and third idler rollers 20, 21 which cause the cutting roller 24 to rotate at a speed faster than that of the sheet plastics material 22. As the sheet plastics material passes over the cutting roller 24, the pointed ends 27 of blades 23 individually piece the sheet and the edges 28 of the blades cut slits into the sheet. The pattern produced is illustrated in Fig. 3 in which item 33 refers to the slits formed in the sheet.

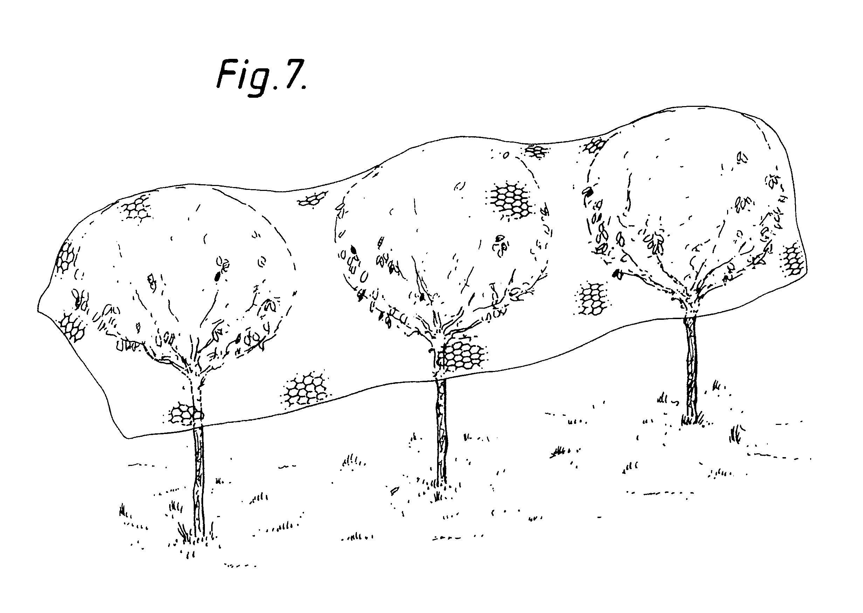

When expanded transversely of the slit direction, the sheet produces an open polygonal netting structure as depicted in Fig. 2. This netting, in use, may be draped over orchard crops as depicted in Fig. 7. It can be seen that such a structure would enable a trapped bird to easily get out of by extending the slit lines or by rupturing the plastics material itself in view of its very thin cross-section.

The netting thus described overcomes the problems previously mentioned in prior art nets and is very economical to produce.

Whilst the above has been given by way of illustrative example of the invention, many modifications and variations may be made thereto by persons skilled in the art without departing from the broad scope and ambit of the invention as herein set forth in the following claims.

**Claims**

1. A sheet of plastics material having a multiplicity of slits formed therein in characterised in that the pattern of slits is such that the sheet is expandable in a direction which is transverse to the direction of at least some of said slits so as to produce a netting having an array of open polygonal shapes.

2. A sheet of plastics material as claimed in claim 1, characterised in that the slits are arranged in one or more groups extending from one edge of the sheet to the other in substantially parallel alignment with respect to the said sheet edge, the slits of said one or more groups of slits individually extending a short distance between a similar array of slits in an adjacent location; such an arrangement of slits being repeated through the said sheet of plastics material.

3. A sheet of plastics material as claimed in claim 2, characterised in that said one or more groups of slits extend from one edge of the sheet to the other in a sinuous pattern.

4. A sheet of plastics material as claimed in claim 2 or claim 3, characterised in that the spacing between adjacent slits of a group is within the range of 2 mm to 20 mm.

5. A sheet of plastics material as claimed in any one of claims 2-4, characterised in that the slits are between 3 and 10 centimetres in length.

6. A sheet of plastics material as claimed in any one of the preceding claims characterised in that it has a thickness in the range of 20-60 microns.

7. A sheet of plastics material as claimed in any one of the preceding claims, characterised in that it has a laminate structure.

8. A sheet of plastics material as claimed in any one of the preceding claims, characterised in that it incorporates an insect/animal repellant in its fabric.

9. A sheet of plastics material as claimed in any one of the preceding claims characterised in that it is manufactured from polythene.

10. A process for manufacturing netting which comprises passing a sheet of plastics material over a plurality of blades, said process being characterised in that the blades are arranged in a spaced off set configuration with respect to one another so as to produce an array of slits in the sheet, said sheet of plastics material being expandable in a direction which is transverse to the direction of at least some of said slits to thereby form a netting having an array of open polygonal shapes.

11. A process as claimed in claim 10, characterised in that the sheet of plastics material is slit as it is unrolled from a continuous roll and is then immediately wound onto a take-up spool.

12. A process as claimed in claim 10 or claim 11, characterised in that the blades are arranged to rotate into and out of the plastics sheet material and are located on a plurality of discs which rotate about a common shaft beneath the passing sheet of plastics material.

13. A process as claimed in claim 12, characterised in that the discs rotate faster than the speed of travel of the plastics sheet material.

14. Apparatus for manufacturing netting comprising a freely rotatable roller (16) for supporting a roll (18) of sheet plastics material, a drive roller (10) for taking-up the sheet plastics material (22) from the freely rotatable roller (16), characterised by a plurality of blades (23) supported for rotation about a common shaft (24) located intermediate of the freely rotatable roller (16) and the drive-roller (10) for slitting the sheet plastics material (22) which is arranged to pass thereover.

15. Apparatus as claimed in claim 14 characterised by two idler rollers (20, 21) acting in concert about which the sheet plastics material (22) travels prior to passing over the blade containing shaft (10), and a single support roller over which the cut sheet material passes prior to being rolled up onto the drive roller (10).

16. Apparatus as claimed in claim 14 or claim 15, characterised in that the blades (23) are attached to the periphery of a plurality of discs (25).

17. Apparatus as claimed in claim 18, characterised in that the blades (23) on adjacent discs (25) are offset from one another so that adjacent slits are not cut simultaneously in the sheet plastics material.

18. Apparatus as claimed in claim 16 or claim 17, characterised in that there are two blades (23) on each disc (25), which blades are separated from one another by 180°.

19. Apparatus as claimed in any one of claims 16 - 18, characterised in that the discs (25) have a diameter between 20 and 200 mm.

20. Apparatus as claimed in any one of claims 16 - 19, characterised in that the blades (25) are trapezoidal shaped pieces of spring steel which are honed on one edge (28) and project outwardly from each disc (25) in the same plane as the disc (25).

Fig.1.

*Fig.2.*

*Fig.3.*

*Fig.4.*

*Fig.5.*

*Fig.6.*

Fig. 7.

European
Patent Office

**EUROPEAN SEARCH
REPORT**

Application Number

**EP 91 30 1486**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-2 835 092   (BREVETEAM S.A.)  * page 1, lines 11-18; page 7, line 19 - page 8, line 2; page 10, lines 1-5; figure 4 * | 1-7 | A 01 G 13/10 |
| Y | | 8 | |
| | – – – | | |
| Y | EP-A-0 347 266   (J.C.M. HUREAU)  * claim 1 * | 8 | |
| | – – – | | |
| X | US-A-3 790 652   (J.J.V. COLIJN et al.)  * column 4, lines 4-6; column 5, lines 11-39; figures 2,4-6 * | 1,9-12, 14-17 | |
| Y | | 13 | |
| | – – – | | |
| Y | CH-A-4 893 44   (E. SCRAGG & SONS LTD.)  * column 4, lines 1-11; figures 1,2 * | 13 | |
| | – – – – – | | |

TECHNICAL FIELDS
SEARCHED (Int. Cl.5)

A 01 G
B 26 F

The present search report has been drawn up for all claims

| Place of search | Date of completion of search | Examiner |
|---|---|---|
| Berlin | 12 July 91 | MARTIN DEL RIO A |